# EUROPEAN PATENT APPLICATION

(11) **EP 4 478 813 A1**
(43) Date of publication of application: **18.12.2024**
(21) Application number: 23752399.8
(22) Date of filing: 09.02.2023
(51) Int. Cl.: H04W 72/04

(54) **MONITORING METHOD AND APPARATUS, AND CHIP AND MODULE DEVICE**

(30) Priority: 11.02.2022 CN 202210130553
(71) Applicant: Beijing Unisoc Communications Technology Co., Ltd., Beijing 100083 (CN)
(72) Inventor: WANG, Hualei, Beijing 100083 (CN)
(74) Representative: Mewburn Ellis LLP
(86) International application number: PCT/CN2023/075189
(87) International publication number: WO 2023/151619

(57) **Abstract**

Monitoring methods and apparatuses, a chip, and a module device are provided in the disclosure. The method is applied to a terminal device and includes: not expecting to monitor a physical downlink control channel (PDCCH) in a target type common search space (CSS) set or not expecting to monitor a PDCCH in a Type 1-PDCCH CSS set, if a quasi-co-location type D (QCL-TypeD) property of a first demodulation reference signal (DM-RS) is different from a QCL-TypeD property of a second DM-RS and if the PDCCH in the Typel-PDCCH CSS set or a physical downlink shared channel (PDSCH) associated with the PDCCH in the Typel-PDCCH CSS set overlaps in at least one symbol with the PDCCH in the target type CSS set or with a PDSCH associated with the PDCCH in the target type CSS set, where the first DM-RS is used for monitoring the PDCCH in the Typel-PDCCH CSS set, the second DM-RS is used for monitoring the PDCCH in the target type CSS set. Based on the method described in the disclosure, it is beneficial to avoiding errors in a terminal device.

## Description

### TECHNICAL FIELD

This application relates to the field of computers, and particularly to monitoring methods and apparatuses, a chip, and a module device.

### BACKGROUND

In the new radio (NR) system, a terminal device can obtain downlink control information (DCI) carried in a physical downlink control channel (PDCCH) by monitoring and/or detecting the PDCCH.

In the NR system, due to a large system bandwidth, the concept of control resource set (CORESET) is introduced. The terminal device needs to know frequency domain location and time domain location of the PDCCH to successfully decode the PDCCH. The NR system encapsulates in the CORESET information such as a frequency band occupied by the PDCCH in frequency domain and the quantity of orthogonal frequency division multiplexing (OFDM) symbols occupied by the PDCCH in time domain, and encapsulates in a search space information such as the number of a starting OFDM symbol of the PDCCH and the monitoring period of the PDCCH. The search space is classified into a common search space (CSS) and a UE-specific search space (USS). The CSS can be used to transmit control information (i.e., cell-level public control information) related to broadcast control channel (BCCH), paging, etc. The USS is used to transmit control information (i.e., UE-level control information) related to downlink shared channel (DL-SCH), uplink shared channel (UL-SCH), etc. Currently, the CSS has the following search space types: Type0-PDCCH CSS, Type0A-PDCCH CSS, Typel-PDCCH CSS, Type2-PDCCH CSS, Type3-PDCCH CSS, Type0B-PDCCH CSS, Type1A-PDCCH CSS, and Type2A-PDCCH CSS.

In practice, the following conflicts may occur: a quasi-co-location type D (QCL-TypeD) property of a demodulation reference signal (DM-RS) for monitoring a PDCCH in a first type of search space set is different from a QCL-TypeD property of a DM-RS for monitoring a PDCCH in a second type of search space set, and the PDCCH in the first type of search space set or a physical downlink shared channel (PDSCH) associated with the PDCCH in the first type of search space set overlaps in at least one symbol with the PDCCH in the second type of search space set or with a PDSCH associated with the PDCCH in the second type of search space set. The occurrence of such conflict may cause the terminal device to use different receiving beams to receive different physical downlink channels at the same time, thereby causing errors in the terminal device.

### SUMMARY

The disclosure provides monitoring methods and apparatuses, a chip, and a module device, which is beneficial to avoiding errors in a terminal device.

In a first aspect, the disclosure provides a monitoring method. The monitoring method is applied to a terminal device and includes: not expecting to monitor a physical downlink control channel (PDCCH) in a target type common search space (CSS) set or not expecting to monitor a PDCCH in a Typel-PDCCH CSS set, in response to a quasi-co-location type D (QCL-TypeD) property of a first demodulation reference signal (DM-RS) being different from a QCL-TypeD property of a second DM-RS and in response to the PDCCH in the Typel-PDCCH CSS set or a physical downlink shared channel (PDSCH) associated with the PDCCH in the Typel-PDCCH CSS set overlapping in at least one symbol with the PDCCH in the target type CSS set or with a PDSCH associated with the PDCCH in the target type CSS set, the first DM-RS being used for monitoring the PDCCH in the Typel-PDCCH CSS set, the second DM-RS being used for monitoring the PDCCH in the target type CSS set, and the target type being TypeOB-PDCCH, and/or Type2A-PDCCH, and/or Type1A-PDCCH.

Based on the method described in the first aspect, when a conflict occurs, the terminal device will not monitor both the PDCCH in the Typel-PDCCH CSS set and the PDCCH in the target type CSS set, so that the terminal device does not need to use different receiving beams to receive different physical downlink channels at the same time, which is beneficial to avoiding errors in the terminal device.

In a possible embodiment, in response to not expecting to monitor the PDCCH in the target type CSS set, the terminal device monitors the PDCCH in the Typel-PDCCH CSS set. Based on this possible embodiment, it is possible to ensure normal monitoring of the PDCCH in the Type1-PDCCH CSS set and therefore, will not affect subsequent reception of the PDSCH associated with the PDCCH in the Typel-PDCCH CSS set by the terminal device.

In a possible embodiment, in response to not expecting to monitor the PDCCH in the Typel-PDCCH CSS set, the terminal device monitors the PDCCH in the target type CSS set. Based on this possible embodiment, it is possible to ensure normal monitoring of the PDCCH in the target type CSS set and therefore, will not affect subsequent reception of the PDSCH associated with the PDCCH in the target type CSS set by the terminal device.

In a possible embodiment, not expecting to monitor the PDCCH in the target type CSS set includes: for a single cell operation or an operation with carrier aggregation in a same frequency band, not expecting to monitor the PDCCH in the target type CSS set; or not expecting to monitor the PDCCH in the Typel-PDCCH CSS set includes: for a single cell operation or an operation with carrier aggregation in a same frequency band, not expecting to monitor the PDCCH in the Type1-PDCCH CSS set.

In a second aspect, the disclosure provides a monitoring method. The monitoring method is applied to a terminal device and includes: not expecting to monitor a PDCCH in a Type1A-PDCCH CSS set or not expecting to monitor a PDCCH in a UE-specific search space (USS) set or a target type CSS set, in response to a QCL-TypeD property of a first DM-RS being different from a QCL-TypeD property of a second DM-RS and in response to the PDCCH in the Type1A-PDCCH CSS set or a PDSCH associated with the PDCCH in the Type1A-PDCCH CSS set overlapping in at least one symbol with the PDCCH in the USS set and/or the target type CSS set or with a PDSCH associated with the PDCCH in the USS set and/or the target type CSS set, the first DM-RS being used for monitoring the PDCCH in the Type1A-PDCCH CSS set, the second DM-RS being used for monitoring the PDCCH in the USS set and/or the target type CSS set, and the target type being Type0-PDCCH, and/or Type0A-PDCCH, and/or TypeOB-PDCCH, and/or Type2-PDCCH, and/or Type2A-PDCCH, and/or Type3-PDCCH.

The method described in the second aspect is beneficial to avoiding errors in the terminal device.

In a possible embodiment, in response to not expecting to monitor the PDCCH in the Type1A-PDCCH CSS set, the terminal device monitors the PDCCH in the USS set and/or the target type CSS set. Based on this possible embodiment, it is possible to ensure normal monitoring of the PDCCH in the USS set and/or the target type CSS set and therefore, will not affect subsequent reception of the PDSCH associated with the PDCCH in the USS set and/or the target type CSS set by the terminal device.

In a possible embodiment, in response to not expecting to monitor the PDCCH in the USS set or the target type CSS set, the terminal device monitors the PDCCH in the Type1A-PDCCH CSS set. Based on this possible embodiment, it is possible to ensure normal monitoring of the PDCCH in the Type1A-PDCCH CSS set and therefore, will not affect subsequent reception of the PDSCH associated with the PDCCH in the Type1A-PDCCH CSS set by the terminal device.

In a possible embodiment, not expecting to monitor the PDCCH in the Type1A-PDCCH CSS set includes: for a single cell operation or an operation with carrier aggregation in a same frequency band, not expecting to monitor the PDCCH in the Type1A-PDCCH CSS set; or not expecting to monitor the PDCCH in the USS set or the target type CSS set includes: for a single cell operation or an operation with carrier aggregation in a same frequency band, not expecting to monitor the PDCCH in the USS set or the target type CSS set.

In a third aspect, the disclosure provides a monitoring method. The monitoring method is applied to a terminal device and includes: monitoring a target PDCCH, in response to a QCL-TypeD property of a first DM-RS being different from a QCL-TypeD property of a second DM-RS and in response to a PDCCH in a Typel-PDCCH CSS set or a PDSCH associated with the PDCCH in the Typel-PDCCH CSS set overlapping in at least one symbol with a PDCCH in a target type CSS set or with a PDSCH associated with the PDCCH in the target type CSS set, the first DM-RS being used for monitoring the PDCCH in the Typel-PDCCH CSS set, the second DM-RS being used for monitoring the PDCCH in the target type CSS set, the target type being TypeOB-PDCCH, and/or Type2A-PDCCH, and/or Type1A-PDCCH, and the target PDCCH being the PDCCH in the Type1-PDCCH CSS set or the PDCCH in the target type CSS set.

Based on the method described in the third aspect, when a conflict occurs, the terminal device will not monitor both the PDCCH in the Typel-PDCCH CSS set and the PDCCH in the target type CSS set, which is beneficial to avoiding errors in the terminal device.

In a possible embodiment, monitoring the target PDCCH includes: for a single cell operation or an operation with carrier aggregation in a same frequency band, monitoring the target PDCCH.

In a fourth aspect, the disclosure provides a monitoring method. The monitoring method is applied to a terminal device and includes: monitoring a target PDCCH, in response to a QCL-TypeD property of a first DM-RS being different from a QCL-TypeD property of a second DM-RS and in response to a PDCCH in a Type1A-PDCCH CSS set or a PDSCH associated with the PDCCH in the Type1A-PDCCH CSS set overlapping in at least one symbol with a PDCCH in a USS set and/or a target type CSS set or with a PDSCH associated with the PDCCH in the USS set and/or the target type CSS set, the first DM-RS being used for monitoring the PDCCH in the Type1A-PDCCH CSS set, the second DM-RS being used for monitoring the PDCCH in the USS set and/or the target type CSS set, the target type being Type0-PDCCH, and/or Type0A-PDCCH, and/or TypeOB-PDCCH, and/or Type2-PDCCH, and/or Type2A-PDCCH, and/or Type3-PDCCH, and the target PDCCH being the PDCCH in the USS set or the target type CSS set, or the PDCCH in the Type1A-PDCCH CSS set.

Based on the method described in the fourth aspect, when a conflict occurs, the terminal device will not monitor both the PDCCH in the USS set or the target type CSS set and the PDCCH in the Type1A-PDCCH CSS set, which is beneficial to avoiding errors in the terminal device.

In a possible embodiment, monitoring the target PDCCH includes: for a single cell operation or an operation with carrier aggregation in a same frequency band, monitoring the target PDCCH.

In a fifth aspect, the disclosure provides a monitoring apparatus. The monitoring apparatus includes a unit configured to execute the method of the first aspect or any possible embodiment thereof, or a unit configured to execute the method of the second aspect or any possible embodiment thereof, or a unit configured to execute the method of the third aspect, or a unit configured to execute the method of the fourth aspect.

In a sixth aspect, the disclosure provides a chip. The chip includes a processor and a communication interface. The processor is configured to cause the chip to execute the method in the first aspect or any possible embodiment thereof, or to execute the method in the second aspect or any possible embodiment thereof, or to execute the method in the third aspect, or to execute the method in the fourth aspect.

In a seventh aspect, the disclosure provides a module device. The module device includes a communication module, a power module, a storage module, and a chip. The power module is configured to provide power for the module device. The storage module stores data and instructions. The communication module is configured for internal communication of the module device, or for the module device to communicate with an external device. The chip is configured to execute the method in the first aspect or any possible embodiment thereof, or to execute the method in the second aspect or any possible embodiment thereof, or to execute the method in the third aspect, or to execute the method in the fourth aspect.

In an eighth aspect, embodiments of the disclosure provide a terminal device. The terminal device includes a memory and a processor. The memory is used to store computer programs. The computer programs include program instructions which, when called by the processor, are operable to execute the method in the first aspect or any possible embodiment thereof, or to execute the method in the second aspect or any possible embodiment thereof, or to execute the method in the third aspect, or to execute the method in the fourth aspect.

In a ninth aspect, the disclosure provides a computer-readable storage medium. The computer-readable storage medium stores computer-readable instructions which, when run on a communication device, are operable with the communication device to execute the method in the first aspect or any possible embodiment thereof, or to execute the method in the second aspect or any possible embodiment thereof, or to execute the method in the third aspect, or to execute the method in the fourth aspect.

In a tenth aspect, the disclosure provides a computer program or a computer program product. The computer program or the computer program product includes codes or instructions which, when run on a computer, are operable with the computer to execute the method in the first aspect or any possible embodiment thereof, or to execute the method in the second aspect or any possible embodiment thereof, or to execute the method in the third aspect, or to execute the method in the fourth aspect.

### BRIEF DESCRIPTION OF THE DRAWINGS

In order to describe technical solutions of embodiments of the disclosure more clearly, the following will give a brief description of accompanying drawings used for describing the embodiments. Apparently, accompanying drawings described below are merely some embodiments. Those of ordinary skill in the art can also obtain other accompanying drawings based on the accompanying drawings described below without creative efforts.
FIG. 1 is a schematic flowchart illustrating a monitoring method provided in embodiments of the disclosure.
FIG. 2 is a schematic flowchart illustrating another monitoring method provided in embodiments of the disclosure.
FIG. 3 is a schematic flowchart illustrating another monitoring method provided in embodiments of the disclosure.
FIG. 4 is a schematic flowchart illustrating another monitoring method provided in embodiments of the disclosure.
FIG. 5 is a schematic structural diagram illustrating a terminal device provided in embodiments of the disclosure.
FIG. 6 is a schematic structural diagram illustrating a module device provided in embodiments of the disclosure.

### DETAILED DESCRIPTION

Hereinafter, technical solutions of embodiments of the disclosure will be described in a clear and comprehensive manner with reference to accompanying drawings intended for the embodiments. It is evident that the embodiments described herein are some rather than all embodiments of the disclosure. Those of ordinary skill in the art will be able to derive other embodiments based on these embodiments without making creative efforts, which all such derived embodiments shall all fall within the protection scope of the disclosure.

It should also be understood that, terms used in the specification of the disclosure are merely for describing a specific embodiment, and not intended to limit the disclosure. As used in the specification and claims of the disclosure, unless the context clearly indicates otherwise, the terms "a/an", "a piece of", "said", "above", "the", and "this" in a singular form, and the like may be in a plural form, unless the context clearly indicates otherwise. It should be further understood that, the term "and/or" used in the disclosure refers to any combination of one or more of items listed in association and all possible combinations, and includes these combinations.

It should be noted that, the terms "first", "second", "third", and the like used in the specification, the claims, and the accompany drawings of the disclosure are used to distinguish different objects rather than describe a particular order or sequence. It is to be understood that, the terms so used are interchangeable under appropriate circumstances such that the embodiments of the disclosure described herein are capable of being practiced in sequences other than illustrated or described herein. The terms "include", "comprise", and "have" as well as variations thereof are intended to cover non-exclusive inclusion. For example, a process, method, system, product, or server including a series of steps or units is not limited to the listed steps or units, on the contrary, it can optionally include other steps or units not expressly listed or inherent to such process, method, product, or device.

The technical solutions of embodiments of the disclosure can be applied to various communication systems, such as a global system of mobile communication (GSM) system, a code division multiple access (CDMA) system, a wideband code division multiple access (WCDMA) system, a general packet radio service (GPRS), a long term evolution (LTE) system, a LTE frequency division duplex (FDD) system, a LTE time division duplex (TDD) system, a universal mobile telecommunication system (UMTS), a worldwide interoperability for microwave access (WiMAX) communication system, a fifth generation (5G) system or new radio (NR), or a future communication system.

In order to facilitate understanding of the solutions of embodiments of the disclosure, technical terms involved in the disclosure are first introduced below.

### 1. Terminal device

The terminal device may include a device that provides voice and/or data connectivity for users. For example, the terminal device is a device with a wireless transceiver function, which can be deployed on land, including indoors or outdoors, handheld, wearable, or vehicle-mounted; can also be deployed on the water surface (e.g., ships,); can also be deployed in the air (e.g., airplanes, balloons, and satellites). A terminal may be a mobile phone, a tablet computer (Pad), a computer with a wireless transceiver function, a virtual reality (VR) terminal device, an augmented reality (AR) terminal device, a wireless terminal in industrial control, a vehicle-mounted terminal device, a wireless terminal in self-driving, a wireless terminal in remote medical, a wireless terminal in smart grid, a wireless terminal in transportation safety, a wireless terminal in smart city, a wireless terminal in smart home, a wearable terminal device, etc. There is no limitation on the application scenarios of embodiments of the disclosure. The terminal may also be sometimes referred to as a terminal device, user equipment (UE), an access terminal device, a vehicle-mounted terminal, an industrial control terminal, a UE unit, a UE station, a mobile station, a remote station, a remote terminal device, a mobile device, a UE terminal device, a terminal device, a wireless communication device, a UE agent or UE device, etc. The terminal may also be fixed or mobile. In embodiments of the disclosure, a device for implementing the function of a terminal device may be a terminal device, or may be a device capable of supporting a terminal device to implement the function, such as a chip system or a combination device or component capable of implementing the function of a terminal device, and the device may be installed in a terminal device.

### 2. Search Space

Information such as the number of a starting orthogonal frequency division multiplexing (OFDM) symbol of a physical downlink control channel (PDCCH) and a monitoring period of the PDCCH are encapsulated in the search space.

The search space includes a common search space (CSS) and a UE-specific search space (USS). The CSS can be used to transmit control information (i.e., cell-level common control information) related to a broadcast control channel (BCCH), paging, etc. The USS can be used to transmit control information (i.e., UE-level control information) related to a downlink shared channel (DL-SCH), an uplink shared channel (UL-SCH), etc. The CSS is mainly used when accessing a cell and when performing cell switching, while the USS is mainly used after accessing a cell. A CSS set includes CSSs of one or more aggregation levels. A USS set includes USSs of one or more aggregation levels.

Existing search space types are shown in Table 1.

**Table 1**

| Search Space | Search Space Type |
|---|---|
| CSS | Type0-PDCCH CSS |
| | Type0A-PDCCH CSS |
| | Typel-PDCCH CSS |
| | Type2-PDCCH CSS |
| | Type3-PDCCH CSS |
| | TypeOB-PDCCH CSS |
| | Type1A-PDCCH CSS |
| | Type2A-PDCCH CSS |
| USS | / |

Type0-PDCCH CSS set can be used for scheduling a system information block 1 (SIB1), and/or schedule a multicast control channel (MCCH) and/or a multicast transmission channel (MTCH). Type0A-PDCCH CSS set can be used for scheduling other SIBs. Typel-PDCCH CSS set can be used for scheduling random access response (RAR)/msg4. Type2-PDCCH CSS set can be used for paging. Type3-PDCCH CSS set can be used for receiving group common downlink control indication and is also used for receiving user data on a primary cell.

TypeOB-PDCCH CSS, Type1A-PDCCH CSS, and Type2A-PDCCH CSS are newly introduced search space types.

TypeOB-PDCCH CSS set can be configured by searchSpaceBroadcast in pdcch-Config-MCCH and pdcch-Config-MTCH, and is used for downlink control information (DCI) format with cyclic redundancy check (CRC) scrambled by MCCH-RNTI or G-RNTI, on a primary cell and/or a secondary cell of a master cell group (MCG). TypeOB-PDCCH CSS set can be used for scheduling broadcast reception of broadcast multicast services.

Type1A-PDCCH CSS set can be configured by sdt-SearchSpace in PDCCH-ConfigCommon, and is used for DCI format with CRC scrambled by C-RNTI or CS-RNTI, on a primary cell. Type1A-PDCCH CSS set can be used for scheduling and/or responding to information related to packet data transmission.

Type2A-PDCCH CSS set is configured by peiSearchSpacein DownlinkConfigCommonSIB, and is used for DCI format 2_7 with CRC scrambled by RNTI, on a primary cell of the MCG. Type2A-PDCCH CSS set can be used for paging early indication (PEI), thereby reducing power consumption of a terminal device.

### 3. Quasi co-location (QCL)

The QCL relationship is used to indicate that multiple resources have one or more identical or similar communication properties. For multiple resources in a QCL relationship, same or similar communication configuration can be used. For example, if two antenna ports are in a QCL relationship, a large-scale property of a channel over which a symbol on a port is conveyed can be inferred from a large-scale property of a channel over which a symbol on another port is conveyed. The large-scale property includes one or more of the following: delay spread, average delay, Doppler spread, Doppler shift, average gain, Rx parameter, the number of a receiving beam of a terminal device, transmit/receive channel correlation, receive angel-of-arrival (AoA), spatial correlation of receiver antennas, main AoA, average AoA, expansion of AoA, etc.

QCL types are as follows:
QCL-TypeA: includes average delay, Doppler shift, delay spread, Doppler spread;
QCL-TypeB: includes Doppler shift, Doppler spread;
QCL-TypeC: includes average delay, Doppler shift;
QCL-TypeD: includes spatial Rx parameter, i.e., receiving beam.

If QCL-TypeD properties of two signals or channels are the same, the terminal device uses a same receiving beam to receive the two signals or channels. If the QCL-TypeD properties of the two signals or channels are different, the terminal device uses different receiving beams to receive the two signals or channels.

### 4. Demodulation reference signals (DM-RS)

The DM-RS is widely mapped to various important physical channels. For example, the DM-RS can be used to demodulate a PDCCH and a physical downlink shared channel (PDSCH). The most important function of the DM-RS is demodulation of various physical channels.

In practice, the following conflicts may occur: a QCL-TypeD property of a DM-RS for monitoring a PDCCH in a first type of search space set is different from a QCL-TypeD property of a DM-RS for monitoring a PDCCH in a second type of search space set, and the PDCCH in the first type of search space set or a PDSCH associated with the PDCCH in the first type of search space set overlaps in at least one symbol with the PDCCH in the second type of search space set or with a PDSCH associated with the PDCCH in the second type of search space set. Since a receiving beam of the PDCCH in the first type of search space set and the PDSCH associated with the PDCCH in the first type of search space set is the same as a receiving beam of the DM-RS for monitoring the PDCCH in the first type of search space set, and a receiving beam of the PDCCH in the second type of search space set and the PDSCH associated with the PDCCH in the second type of search space set is the same as a receiving beam of the DM-RS for monitoring the PDCCH in the second type of search space set, in the event of the above conflict, the terminal device needs to use different receiving beams to receive different physical downlink channels at the same time. As an example, if the QCL-TypeD property of the DM-RS for monitoring the PDCCH in the first type of search space set is different from the QCL-TypeD property of the DM-RS for monitoring the PDCCH in the second type of search space set and if the PDSCH associated with the PDCCH in the first type of search space set overlaps in at least one symbol with the PDCCH in the second type of search space set, the terminal device needs to use different receiving beams to receive the PDSCH associated with the PDCCH in the first type of search space set and the PDCCH in the second type of search space set at the same time. Since the terminal device cannot use different receiving beams to receive different physical downlink channels at the same time, it will cause errors in the terminal device.

In order to avoid errors in the terminal device, embodiments of the disclosure provide monitoring methods and apparatuses, a chip, and a module device. The monitoring methods provided in embodiments of the disclosure are described in detail below.

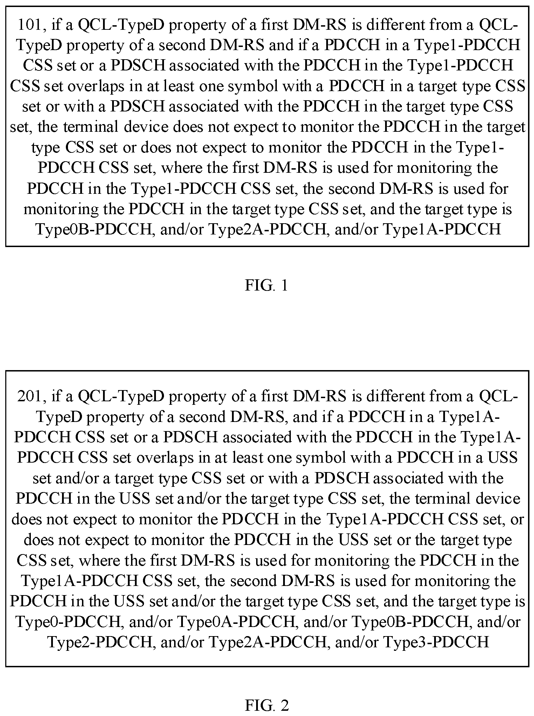

Referring to FIG. 1, FIG. 1 is a schematic flowchart illustrating a monitoring method provided in embodiments of the disclosure. The monitoring method includes operations at 101. The method illustrated in FIG. 1 may be executed by a terminal device or a chip in the terminal device. Exemplarily, the method illustrated in FIG. 1 is executed by a terminal device.

101, if a QCL-TypeD property of a first DM-RS is different from a QCL-TypeD property of a second DM-RS and if a PDCCH in a Typel-PDCCH CSS set or a PDSCH associated with the PDCCH in the Typel-PDCCH CSS set overlaps in at least one symbol with a PDCCH in a target type CSS set or with a PDSCH associated with the PDCCH in the target type CSS set, the terminal device does not expect to monitor the PDCCH in the target type CSS set or does not expect to monitor the PDCCH in the Typel-PDCCH CSS set, where the first DM-RS is used for monitoring the PDCCH in the Typel-PDCCH CSS set, the second DM-RS is used for monitoring the PDCCH in the target type CSS set, and the target type is TypeOB-PDCCH, and/or Type2A-PDCCH, and/or Type1 A-PDCCH.

In embodiments of the disclosure, the first DM-RS can be used to demodulate the PDCCH in the Typel-PDCCH CSS set, and the second DM-RS can be used to demodulate the PDCCH in the target type CSS set.

In embodiments of the disclosure, the target type may be other search space types in addition to TypeOB-PDCCH and/or Type2A-PDCCH and/or Type1 A-PDCCH, which is not limited in embodiments of the disclosure.

In embodiments of the disclosure, the PDSCH associated with the PDCCH in the Type1-PDCCH CSS set may be a PDSCH scheduled or activated by the PDCCH in the Typel-PDCCH CSS set, and the PDSCH associated with the PDCCH in the target type CSS set may be a PDSCH scheduled or activated by the PDCCH in the target type CSS set. For example, there are PDCCH1, PDCCH2, PDSCH1 and PDSCH2, if PDCCH1 is used for scheduling PDSCH1, PDSCH1 is a PDSCH associated with PDCCH1; if PDCCH2 is used for scheduling PDSCH2, PDSCH2 is a PDSCH associated with PDCCH2.

It can be understood that, in embodiments of the disclosure, when the QCL-TypeD property of the first DM-RS is different from the QCL-TypeD property of the second DM-RS and any one of the following four conditions is met, the terminal device does not expect to monitor the PDCCH in the target type CSS set, or does not expect to monitor the PDCCH in the Typel-PDCCH CSS set.

Condition 1: the PDCCH in the Typel-PDCCH CSS set overlaps in at least one symbol with the PDCCH in the target type CSS set.

Condition 2: the PDSCH associated with the PDCCH in the Typel-PDCCH CSS set overlaps in at least one symbol with the PDSCH associated with the PDCCH in the target type CSS set.

Condition 3: the PDCCH in the Typel-PDCCH CSS set overlaps in at least one symbol with the PDSCH associated with the PDCCH in the target type CSS set.

Condition 4: the PDSCH associated with the PDCCH in the Typel-PDCCH CSS set overlaps in at least one symbol with the PDCCH in the target type CSS set.

In a possible embodiment, if the terminal device does not expect to monitor the PDCCH in the target type CSS set, the terminal device monitors the PDCCH in the Typel-PDCCH CSS set.

In a possible embodiment, if the terminal device does not expect to monitor the PDCCH in the Typel-PDCCH CSS set, the terminal device monitors the PDCCH in the target type CSS set.

In a possible embodiment, the terminal device does not expect to monitor the PDCCH in the target type CSS set, which can also be understood as the terminal device does not monitor the PDCCH in the target type CSS set. The terminal device does not expect to monitor the PDCCH in the Typel-PDCCH CSS set, which can also be understood as the terminal device does not monitor the PDCCH in the Typel-PDCCH CSS set.

In a possible embodiment, before the operations at 101, the terminal device further determines the QCL-TypeD property of the first DM-RS and the QCL-TypeD property of the second DM-RS.

In a possible embodiment, not expecting to monitor the PDCCH in the target type CSS set includes: for a single cell operation or an operation with carrier aggregation in a same frequency band, not expecting to monitor the PDCCH in the target type CSS set; or not expecting to monitor the PDCCH in the Typel-PDCCH CSS set includes: for a single cell operation or an operation with carrier aggregation in a same frequency band, not expecting to monitor the PDCCH in the Type1-PDCCH CSS set.

It can be understood that, the single cell operation can also be that the terminal device operates in a single cell, or that the terminal device is configured or scheduled to operate to a single cell. The operation with carrier aggregation in the same frequency band can also be that the terminal device operates with carrier aggregation in the same frequency band, or that the terminal device is configured or scheduled to operate with carrier aggregation in the same frequency band. In the following embodiments, the description of the single cell operation or the operation with carrier aggregation in the same frequency band is similar, which will not be repeated in the following.

It can be understood that, the single cell operation or the operation with carrier aggregation in the same frequency band is relative to the terminal device. In the following embodiments, the description of the single cell operation or the operation with carrier aggregation in the same frequency band is similar, which will not be repeated in the following.

Based on the method described in FIG. 1, when a conflict occurs, the terminal device will not monitor both the PDCCH in the Typel-PDCCH CSS set and the PDCCH in the target type CSS set, so that the terminal device does not need to use different receiving beams to receive different physical downlink channels at the same time, which is beneficial to avoiding errors in the terminal device. Moreover, when a conflict occurs, the terminal device does not expect to monitor the PDCCH in the target type CSS set, which can ensure that the terminal device can quickly access the network. When a conflict occurs, the terminal device does not expect to monitor the PDCCH in the Typel-PDCCH CSS set, if the target type is TypeOB-PDCCH, the terminal device can effectively receive broadcast multicast services; if the target type is Type2A-PDCCH, power consumption of a paging process can be reduced; if the target type is Type1A-PDCCH, transmission of small packet services can be ensured.

Referring to FIG. 2, FIG. 2 is a schematic flowchart illustrating a monitoring method provided in embodiments of the disclosure. The monitoring method includes operations at 201. The method illustrated in FIG. 2 may be executed by a terminal device or a chip in the terminal device. Exemplarily, the method illustrated in FIG. 2 is executed by a terminal device.

201, if a QCL-TypeD property of a first DM-RS is different from a QCL-TypeD property of a second DM-RS, and if a PDCCH in a Type1A-PDCCH CSS set or a PDSCH associated with the PDCCH in the Type1A-PDCCH CSS set overlaps in at least one symbol with a PDCCH in a USS set and/or a target type CSS set or with a PDSCH associated with the PDCCH in the USS set and/or the target type CSS set, the terminal device does not expect to monitor the PDCCH in the Type1A-PDCCH CSS set, or does not expect to monitor the PDCCH in the USS set or the target type CSS set, where the first DM-RS is used for monitoring the PDCCH in the Type1A-PDCCH CSS set, the second DM-RS is used for monitoring the PDCCH in the USS set and/or the target type CSS set, and the target type is Type0-PDCCH, and/or Type0A-PDCCH, and/or TypeOB-PDCCH, and/or Type2-PDCCH, and/or Type2A-PDCCH, and/or Type3-PDCCH.

In embodiments of the disclosure, the first DM-RS can be used to demodulate the PDCCH in the Type1A-PDCCH CSS set, and the second DM-RS can be used to demodulate the PDCCH in the USS set and/or the target type CSS set.

In embodiments of the disclosure, the target type may be other search space types in addition to Type0-PDCCH and/or Type0A-PDCCH and/or TypeOB-PDCCH and/or Type2-PDCCH and/or Type2A-PDCCH and/or Type3-PDCCH, which is not limited in embodiments of the disclosure.

In embodiments of the disclosure, the PDSCH associated with the PDCCH in the Type1A-PDCCH CSS set may be a PDSCH scheduled or activated by the PDCCH in the Type1A-PDCCH CSS set, the PDSCH associated with the PDCCH in the target type CSS set may be a PDSCH scheduled or activated by the PDCCH in the target type CSS set, and the PDSCH associated with the PDCCH in the USS set may be a PDSCH scheduled or activated by the PDCCH in the USS set.

It can be understood that, in embodiments of the disclosure, when the QCL-TypeD property of the first DM-RS is different from the QCL-TypeD property of the second DM-RS and any one of the following four conditions is met, the terminal device does not expect to monitor the PDCCH in the target type CSS set, or does not expect to monitor the PDCCH in the Typel-PDCCH CSS set.

Condition 1: the PDCCH in the Type1A-PDCCH CSS set overlaps in at least one symbol with the PDCCH in the USS set and/or the target type CSS set.

Condition 2: the PDSCH associated with the PDCCH in the Type1A-PDCCH CSS set overlaps in at least one symbol with the PDSCH associated with the PDCCH in the USS set and/or the target type CSS set.

Condition 3: the PDCCH in the Type1A-PDCCH CSS set overlaps in at least one symbol with the PDSCH associated with the PDCCH in the USS set and/or the target type CSS set.

Condition 4: the PDSCH associated with the PDCCH in the Type1A-PDCCH CSS set overlaps in at least one symbol with the PDCCH in the USS set and/or the target type CSS set.

In a possible embodiment, if the terminal device does not expect to monitor the PDCCH in the Type1A-PDCCH CSS set, the terminal device monitors the PDCCH in the USS set and/or the target type CSS set.

In a possible embodiment, if the terminal device does not expect to monitor the PDCCH in the USS set and/or the target type CSS set, the terminal device monitors the PDCCH in the Type1A-PDCCH CSS set.

In a possible embodiment, the terminal device does not expect to monitor the PDCCH in the Type1A-PDCCH CSS set, which can also be understood as the terminal device does not monitor the PDCCH in the Type1A-PDCCH CSS set. The terminal device does not expect to monitor the PDCCH in the USS set or the target type CSS set, which can also be understood as the terminal device does not monitor the PDCCH in the USS set or the target type CSS set.

In a possible embodiment, before the operations at 201, the terminal device further determines the QCL-TypeD property of the first DM-RS and the QCL-TypeD property of the second DM-RS.

In a possible embodiment, not expecting to monitor the PDCCH in the Type1A-PDCCH CSS set includes: for a single cell operation or an operation with carrier aggregation in a same frequency band, not expecting to monitor the PDCCH in the Type1A-PDCCH CSS set; or not expecting to monitor the PDCCH in the USS set or the target type CSS set includes: for a single cell operation or an operation with carrier aggregation in a same frequency band, not expecting to monitor the PDCCH in the USS set or the target type CSS set.

Based on the method described in FIG. 2, when a conflict occurs, the terminal device will not monitor both the PDCCH in the Type1A-PDCCH CSS set and the PDCCH in the USS set or the target type CSS set, so that the terminal device does not need to use different receiving beams to receive different physical downlink channels at the same time, which is beneficial to avoiding errors in the terminal device. Moreover, when a conflict occurs, the terminal device does not expect to monitor the PDCCH in the Type1A-PDCCH CSS set, which can ensure that the terminal device obtains broadcast information, accesses the network, obtains paging information, group scheduling information, or user-specific scheduling information as soon as possible. When a conflict occurs, the terminal device does not expect to monitor the PDCCH in the USS set or the target type CSS set, which can ensure transmission of small packet services.

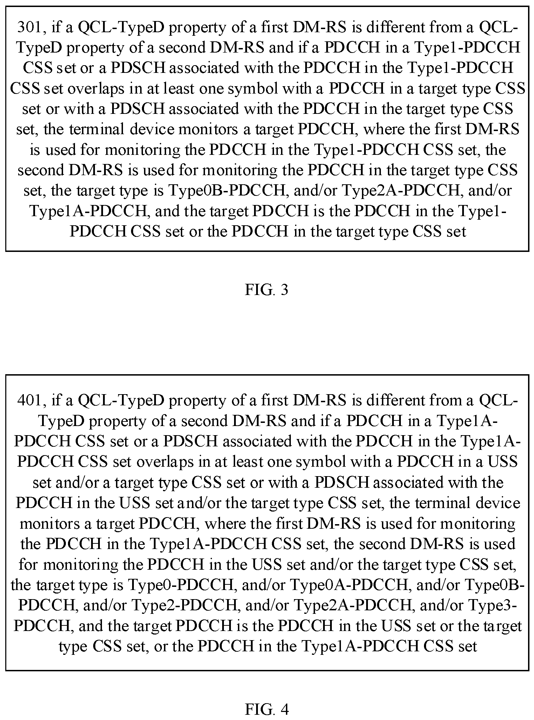

Referring to FIG. 3, FIG. 3 is a schematic flowchart illustrating a monitoring method provided in embodiments of the disclosure. The monitoring method includes operations at 301. The method illustrated in FIG. 3 may be executed by a terminal device or a chip in the terminal device. Exemplarily, the method illustrated in FIG. 3 is executed by a terminal device.

301, if a QCL-TypeD property of a first DM-RS is different from a QCL-TypeD property of a second DM-RS and if a PDCCH in a Typel-PDCCH CSS set or a PDSCH associated with the PDCCH in the Typel-PDCCH CSS set overlaps in at least one symbol with a PDCCH in a target type CSS set or with a PDSCH associated with the PDCCH in the target type CSS set, the terminal device monitors a target PDCCH, where the first DM-RS is used for monitoring the PDCCH in the Typel-PDCCH CSS set, the second DM-RS is used for monitoring the PDCCH in the target type CSS set, the target type is TypeOB-PDCCH, and/or Type2A-PDCCH, and/or Type1A-PDCCH, and the target PDCCH is the PDCCH in the Typel-PDCCH CSS set or the PDCCH in the target type CSS set.

For description of conditions under which the terminal device monitors the target PDCCH at the operations 301, reference may be made to description of conditions under which the terminal device does not expect to monitor the PDCCH in the embodiments corresponding to FIG. 1, which will not be repeated herein.

In a possible embodiment, monitoring the target PDCCH includes: for a single cell operation or an operation with carrier aggregation in a same frequency band, monitoring the target PDCCH.

Based on the method described in FIG. 3, when a conflict occurs, the terminal device will not monitor both the PDCCH in the Typel-PDCCH CSS set and the PDCCH in the target type CSS set, so that the terminal device does not need to use different receiving beams to receive different physical downlink channels at the same time, which is beneficial to avoiding errors in terminal device.

Referring to FIG. 4, FIG. 4 is a schematic flowchart illustrating a monitoring method provided in embodiments of the disclosure. The monitoring method includes operations at 401. The method illustrated in FIG. 4 may be executed by a terminal device or a chip in the terminal device. Exemplarily, the method illustrated in FIG. 4 is executed by a terminal device.

401, if a QCL-TypeD property of a first DM-RS is different from a QCL-TypeD property of a second DM-RS and if a PDCCH in a Type1A-PDCCH CSS set or a PDSCH associated with the PDCCH in the Type1A-PDCCH CSS set overlaps in at least one symbol with a PDCCH in a USS set and/or a target type CSS set or with a PDSCH associated with the PDCCH in the USS set and/or the target type CSS set, the terminal device monitors a target PDCCH, where the first DM-RS is used for monitoring the PDCCH in the Type1A-PDCCH CSS set, the second DM-RS is used for monitoring the PDCCH in the USS set and/or the target type CSS set, the target type is Type0-PDCCH, and/or Type0A-PDCCH, and/or TypeOB-PDCCH, and/or Type2-PDCCH, and/or Type2A-PDCCH, and/or Type3-PDCCH, and the target PDCCH is the PDCCH in the USS set or the target type CSS set, or the PDCCH in the Type1A-PDCCH CSS set.

For description of conditions under which the terminal device monitors the target PDCCH at the operations 401, reference may be made to description of conditions under which the terminal device does not expect to monitor the PDCCH in the embodiments corresponding to FIG. 1, which will not be repeated herein.

In a possible embodiment, monitoring the target PDCCH includes: for a single cell operation or an operation with carrier aggregation in a same frequency band, monitoring the target PDCCH.

Based on the method described in FIG. 4, when a conflict occurs, the terminal device will not monitor both the PDCCH in the USS set or the target type CSS set and the PDCCH in the Type1A-PDCCH CSS set, so that the terminal device does not need to use different receiving beams to receive different physical downlink channels at the same time, which is beneficial to avoiding errors in the terminal device.

Embodiments of the disclosure further provide a monitoring apparatus. The monitoring apparatus may be a terminal device or a device having a terminal device function (e.g., a chip). Specifically, the monitoring apparatus includes a processing unit. The processing unit is configured to not expect to monitor a PDCCH in a target type CSS set or not expect to monitor a PDCCH in a Typel-PDCCH CSS set, if a QCL-TypeD property of a first DM-RS is different from a QCL-TypeD property of a second DM-RS and if the PDCCH in the Typel-PDCCH CSS set or a PDSCH associated with the PDCCH in the Typel-PDCCH CSS set overlaps in at least one symbol with the PDCCH in the target type CSS set or with a PDSCH associated with the PDCCH in the target type CSS set, where the first DM-RS is used for monitoring the PDCCH in the Typel-PDCCH CSS set, the second DM-RS is used for monitoring the PDCCH in the target type CSS set, the target type is TypeOB-PDCCH, and/or Type2A-PDCCH, and/or Type1A-PDCCH.

In a possible embodiment, the monitoring apparatus further includes a communication unit. The communication unit is configured to monitor the PDCCH in the Typel-PDCCH CSS set, in response to not expecting to monitor the PDCCH in the target type CSS set.

In a possible embodiment, the monitoring apparatus further includes a communication unit. The communication unit is configured to monitor the PDCCH in the target type CSS set, in response to not expecting to monitor the PDCCH in the Typel-PDCCH CSS set.

In a possible embodiment, the processing unit configured to not expect to monitor the PDCCH in the target type CSS set is configured to, for a single cell operation or an operation with carrier aggregation in a same frequency band, not expect to monitor the PDCCH in the target type CSS set; or the processing unit configured to not expect to monitor the PDCCH in the Type1-PDCCH CSS set is configured to, for a single cell operation or an operation with carrier aggregation in a same frequency band, not expect to monitor the PDCCH in the Typel-PDCCH CSS set.

Embodiments of the disclosure further provide a monitoring apparatus. The monitoring apparatus may be a terminal device or a device having a terminal device function (e.g., a chip). Specifically, the monitoring apparatus includes a processing unit. The processing unit is configured to not expect to monitor a PDCCH in a Type1A-PDCCH CSS set or not expect to monitor a PDCCH in a USS set or a target type CSS set, if a QCL-TypeD property of a first DM-RS is different from a QCL-TypeD property of a second DM-RS and if the PDCCH in the Type1A-PDCCH CSS set or a PDSCH associated with the PDCCH in the Type1A-PDCCH CSS set overlaps in at least one symbol with the PDCCH in the USS set and/or the target type CSS set or with a PDSCH associated with the PDCCH in the USS set and/or the target type CSS set, where the first DM-RS is used for monitoring the PDCCH in the Type1A-PDCCH CSS set, the second DM-RS is used for monitoring the PDCCH in the USS set and/or the target type CSS set, and the target type is Type0-PDCCH, and/or Type0A-PDCCH, and/or TypeOB-PDCCH, and/or Type2-PDCCH, and/or Type2A-PDCCH, and/or Type3-PDCCH.

In a possible embodiment, the monitoring apparatus further includes a communication unit. The communication unit is configured to monitor the PDCCH in the USS set and/or the target type CSS set, in response to not expecting to monitor the PDCCH in the Type1A-PDCCH CSS set.

In a possible embodiment, the monitoring apparatus further includes a communication unit. The communication unit is configured to monitor the PDCCH in the Type1A-PDCCH CSS set, in response to not expecting to monitor the PDCCH in the USS set or the target type CSS set.

In a possible embodiment, the processing unit configured to not expect to monitor the PDCCH in the Type1A-PDCCH CSS set is configured to, for a single cell operation or an operation with carrier aggregation in a same frequency band, not expect to monitor the PDCCH in the Type1A-PDCCH CSS set; or the processing unit configured to not expect to monitor the PDCCH in the USS set or the target type CSS set is configured to, for a single cell operation or an operation with carrier aggregation in a same frequency band, not expect to monitor the PDCCH in the USS set or the target type CSS set.

Embodiments of the disclosure further provide a monitoring apparatus. The monitoring apparatus may be a terminal device or a device having a terminal device function (e.g., a chip). Specifically, the monitoring apparatus includes a communication unit. The communication unit is configured to monitor a target PDCCH, if a QCL-TypeD property of a first DM-RS is different from a QCL-TypeD property of a second DM-RS and if a PDCCH in a Typel-PDCCH CSS set or a PDSCH associated with the PDCCH in the Typel-PDCCH CSS set overlaps in at least one symbol with a PDCCH in a target type CSS set or with a PDSCH associated with the PDCCH in the target type CSS set, where the first DM-RS is used for monitoring the PDCCH in the Typel-PDCCH CSS set, the second DM-RS is used for monitoring the PDCCH in the target type CSS set, the target type is TypeOB-PDCCH, and/or Type2A-PDCCH, and/or Type1A-PDCCH, and the target PDCCH is the PDCCH in the Typel-PDCCH CSS set or the PDCCH in the target type CSS set.

In a possible embodiment, the communication unit configured to monitor the target PDCCH is configured to, for a single cell operation or an operation with carrier aggregation in a same frequency band, monitor the target PDCCH.

Embodiments of the disclosure further provide a monitoring apparatus. The monitoring apparatus may be a terminal device or a device having a terminal device function (e.g., a chip). Specifically, the monitoring apparatus includes a communication unit. The communication unit is configured to monitor a target PDCCH, if a QCL-TypeD property of a first DM-RS is different from a QCL-TypeD property of a second DM-RS and if a PDCCH in a Type1A-PDCCH CSS set or a PDSCH associated with the PDCCH in the Type1A-PDCCH CSS set overlaps in at least one symbol with a PDCCH in a USS set and/or a target type CSS set or with a PDSCH associated with the PDCCH in the USS set and/or the target type CSS set, where the first DM-RS is used for monitoring the PDCCH in the Type1A-PDCCH CSS set, the second DM-RS is used for monitoring the PDCCH in the USS set and/or the target type CSS set, the target type is Type0-PDCCH, and/or Type0A-PDCCH, and/or TypeOB-PDCCH, and/or Type2-PDCCH, and/or Type2A-PDCCH, and/or Type3-PDCCH, and the target PDCCH is the PDCCH in the USS set or the target type CSS set, or the PDCCH in the Type1A-PDCCH CSS set.

In a possible embodiment, the communication unit configured to monitor the target PDCCH is configured to, for a single cell operation or an operation with carrier aggregation in a same frequency band, monitor the target PDCCH.

Embodiments of the disclosure further provide a chip. The chip can be configured to execute the relevant operations of the network device in the foregoing method embodiments. The chip includes a processor and a communication interface. The processor is configured to cause the chip to execute the following operations: if a QCL-TypeD property of a first DM-RS is different from a QCL-TypeD property of a second DM-RS, and if a PDCCH in a Typel-PDCCH CSS set or a PDSCH associated with the PDCCH in the Typel-PDCCH CSS set overlaps in at least one symbol with a PDCCH in a target type CSS set or with a PDSCH associated with the PDCCH in the target type CSS set, not expecting to monitor the PDCCH in the target type CSS set or not expecting to monitor the PDCCH in the Typel-PDCCH CSS set, where the first DM-RS is used for monitoring the PDCCH in the Typel-PDCCH CSS set, the second DM-RS is used for monitoring the PDCCH in the target type CSS set, the target type is TypeOB-PDCCH, and/or Type2A-PDCCH, and/or Type1A-PDCCH.

In a possible embodiment, in response to not expecting to monitor the PDCCH in the target type CSS set, monitor the PDCCH in the Typel-PDCCH CSS set.

In a possible embodiment, in response to not expecting to monitor the PDCCH in the Typel-PDCCH CSS set, monitor the PDCCH in the target type CSS set.

In a possible embodiment, not expecting to monitor the PDCCH in the target type CSS set includes: for a single cell operation or an operation with carrier aggregation in a same frequency band, not expecting to monitor the PDCCH in the target type CSS set; or not expecting to monitor the PDCCH in the Typel-PDCCH CSS set includes: for a single cell operation or an operation with carrier aggregation in a same frequency band, not expecting to monitor the PDCCH in the Type1-PDCCH CSS set.

Embodiments of the disclosure further provide a chip. The chip can be configured to execute the relevant operations of the network device in the foregoing method embodiments. The chip includes a processor and a communication interface. The processor is configured to cause the chip to execute the following operations: if a QCL-TypeD property of a first DM-RS is different from a QCL-TypeD property of a second DM-RS and if a PDCCH in a Type1A-PDCCH CSS set or a PDSCH associated with the PDCCH in the Type1A-PDCCH CSS set overlaps in at least one symbol with a PDCCH in a USS set and/or a target type CSS set or with a PDSCH associated with the PDCCH in the USS set and/or the target type CSS set, not expecting to monitor the PDCCH in the Type1A-PDCCH CSS set, or not expecting to monitor the PDCCH in the USS set or the target type CSS set, where the first DM-RS is used for monitoring the PDCCH in the Type1A-PDCCH CSS set, the second DM-RS is used for monitoring the PDCCH in the USS set and/or the target type CSS set, and the target type is Type0-PDCCH, and/or Type0A-PDCCH, and/or TypeOB-PDCCH, and/or Type2-PDCCH, and/or Type2A-PDCCH, and/or Type3-PDCCH.

In a possible embodiment, in response to not expecting to monitor the PDCCH in the Type1A-PDCCH CSS set, the PDCCH in the USS set and/or the target type CSS set is also monitored.

In a possible embodiment, in response to not expecting to monitor the PDCCH in the USS set or the target type CSS set, the PDCCH in the Type1A-PDCCH CSS set is also monitored.

In a possible embodiment, not expecting to monitor the PDCCH in the Type1A-PDCCH CSS set includes: for a single cell operation or an operation with carrier aggregation in a same frequency band, not expecting to monitor the PDCCH in the Type1A-PDCCH CSS set; or not expecting to monitor the PDCCH in the USS set or the target type CSS set includes: for a single cell operation or an operation with carrier aggregation in a same frequency band, not expecting to monitor the PDCCH in the USS set or the target type CSS set.

Embodiments of the disclosure further provide a chip. The chip can be configured to execute the relevant operations of the network device in the foregoing method embodiments. The chip includes a processor and a communication interface. The processor is configured to cause the chip to execute the following operations: if a QCL-TypeD property of a first DM-RS is different from a QCL-TypeD property of a second DM-RS and if a PDCCH in a Typel-PDCCH CSS set or a PDSCH associated with the PDCCH in the Typel-PDCCH CSS set overlaps in at least one symbol with a PDCCH in a target type CSS set or with a PDSCH associated with the PDCCH in the target type CSS set, monitoring the target PDCCH, where the first DM-RS is used for monitoring the PDCCH in the Typel-PDCCH CSS set, the second DM-RS is used for monitoring the PDCCH in the target type CSS set, the target type is TypeOB-PDCCH and/or Type2A-PDCCH and/or Type1A-PDCCH, and the target PDCCH is the PDCCH in the Typel-PDCCH CSS set or the PDCCH in the target type CSS set.

In a possible embodiment, monitoring the target PDCCH includes: for a single cell operation or an operation with carrier aggregation in a same frequency band, monitoring the target PDCCH.

Embodiments of the disclosure further provide a chip. The chip can be configured to execute the relevant operations of the network device in the foregoing method embodiments. The chip includes a processor and a communication interface. The processor is configured to cause the chip to execute the following operations: if a QCL-TypeD property of a first DM-RS is different from a QCL-TypeD property of a second DM-RS and if a PDCCH in a Type1A-PDCCH CSS set or a PDSCH associated with the PDCCH in the Type1A-PDCCH CSS set overlaps in at least one symbol with a PDCCH in a USS set and/or a target type CSS set or with a PDSCH associated with the PDCCH in the USS set and/or the target type CSS set, monitoring the target PDCCH, where the first DM-RS is used for monitoring the PDCCH in the Type1A-PDCCH CSS set, the second DM-RS is used for monitoring the USS set and/or the PDCCH in the target type CSS set, the target type is Type0-PDCCH, and/or Type0A-PDCCH, and/or TypeOB-PDCCH, and/or Type2-PDCCH, and/or Type2A-PDCCH, and/or Type3-PDCCH, and the target PDCCH is the PDCCH in the USS set or the target type CSS set, or the PDCCH in the Type1A-PDCCH CSS set.

In a possible embodiment, monitoring the target PDCCH includes: for a single cell operation or an operation with carrier aggregation in a same frequency band, monitoring the target PDCCH.

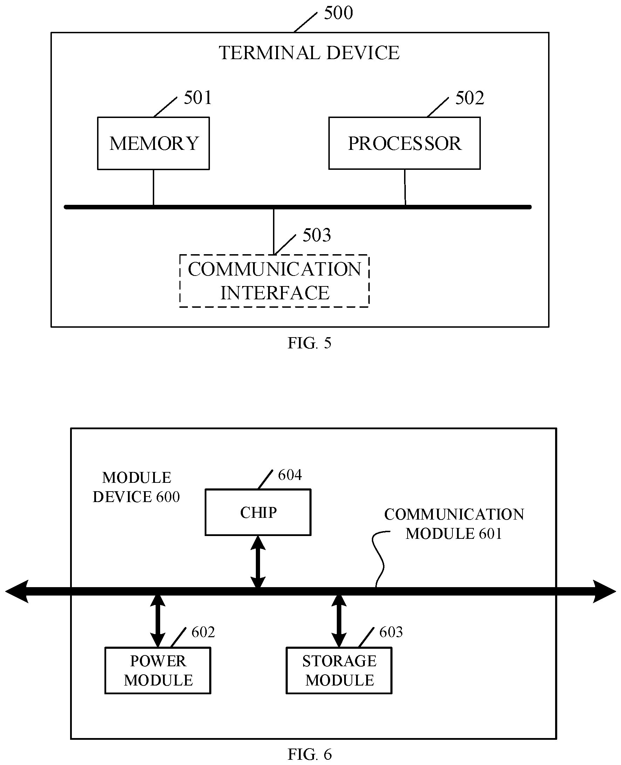

Referring to FIG. 5, FIG. 5 is a schematic structural diagram illustrating a terminal device provided in embodiments of the disclosure. A terminal device 500 includes a memory 501 and a processor 502. Optionally, the terminal device 500 further includes a communication interface 503. The memory 501, the processor 502, and the communication interface 503 are connected to each other via one or more communication buses. The communication interface 503 is controlled by the processor 502 for sending and receiving of information.

The memory 501 may include a read-only memory (ROM) and a random access memory (RAM), and provide instructions and data to the processor 502. A part of the memory 501 may also include a non-transitory random access memory.

The communication interface 503 is used to receive or send data.

The processor 502 may be a central processing unit (CPU). The processor 502 may also be other general-purpose processors, digital signal processors (DSP), application specific integrated circuits (ASIC), field-programmable gate arrays (FPGA) or other programmable logic devices, discrete gates or transistor logic devices, discrete hardware components, etc. The general-purpose processor may be a microprocessor. Optionally, the processor 502 may also be any conventional processor.

The memory 501 is used to store program instructions.

The processor 502 is configured to call the program instructions stored in the memory 501.

The processor 502 is configured to call the program instructions stored in memory 501 to cause the terminal device 500 to execute the method executed by the terminal device in the foregoing method embodiments.

As illustrated in FIG. 6, FIG. 6 is a schematic structural diagram illustrating a module device provided in embodiments of the disclosure. A module device 600 can be configured to execute the relevant operations of the terminal device in the foregoing method embodiments. The module device 600 includes a communication module 601, a power module 602, a storage module 603, and a chip 604.

The power module 602 is configured to provide power for the module device. The storage module 603 stores data and instructions. The communication module 601 is configured for internal communication of the module device, or for the module device to communicate with an external device. The chip 604 is configured to execute the method executed by the terminal device in the foregoing method embodiments.

It should be noted that, for specific implementation of each operation and contents not mentioned in embodiments corresponding to the various apparatuses, the chips, the terminal device, and the module device of embodiments of the disclosure, reference may be made to the embodiments illustrated in FIG. 1 to FIG. 4 and the foregoing contents, which will not be repeated herein.

Embodiments of the disclosure further provide a computer-readable storage medium. The computer-readable storage medium stores instructions which, when run on a processor, are operable to execute the method flow of the foregoing method embodiments.

Embodiments of the disclosure further provide a computer program product which, when run on a processor, is operable to execute the method flow of the foregoing method embodiments.

The various modules/units contained in the various apparatuses and products described in the foregoing embodiments can be software modules/units or hardware modules/units, or be partially software modules/units and partially hardware modules/units. For example, for various apparatuses and products applied to or integrated in a chip, the various modules/units contained therein can all be implemented in the form of hardware such as circuits, or at least some of the modules/units contained therein can be implemented in the form of software programs that run on a processor integrated within the chip, while the remaining modules/units (if any) can be implemented in the form of hardware such as circuits. For various apparatuses and products applied to or integrated in a chip module, the various modules/units contained therein can all be implemented in the form of hardware such as circuits, and different modules/units can be located in a same component (e.g., a chip, a circuit module) or different components of the chip module, or at least some of the modules/units contained therein can be implemented in the form of software programs that run on a processor integrated within the chip module, while the remaining modules/units (if any) can be implemented in the form of hardware such as circuits. For various apparatuses and products applied to or integrated in a terminal, the various modules/units contained therein can all be implemented in the form of hardware such as circuits, and different modules/units can be located in a same component (e.g., a chip, a circuit module) or different components of the terminal, or at least some of the modules/units contained therein can be implemented in the form of software programs that run on a processor integrated within the terminal, while the remaining modules/units (if any) can be implemented in the form of hardware such as circuits.

It is to be noted that, for the sake of simplicity, the foregoing method embodiments are described as a series of action combinations, however, it will be appreciated by those skilled in the art that the disclosure is not limited by the sequence of actions described. That is because that, according to the disclosure, certain steps or operations may be performed in other order or simultaneously. Besides, it will be appreciated by those skilled in the art that the embodiments described in the specification are exemplary embodiments and the actions and modules involved are not necessarily essential to the disclosure.

The description of the various embodiments provided in the disclosure can refer to each other. In the foregoing embodiments, the description of each embodiment has its own emphasis. For the parts not described in detail in one embodiment, reference may be made to related descriptions in other embodiments. For the convenience and simplicity of description, for example, for functions of the various apparatuses and the devices provided in embodiments of the disclosure and the operations performed, reference may be made to the relevant descriptions of the method embodiments of the disclosure, and the various method embodiments and the various apparatus/device embodiments can also refer to, combine, or quote each other.

In sum, it should be noted that, the foregoing embodiments are merely used for illustrating the technical solutions of the disclosure rather than limiting the disclosure. While the disclosure has been described in detail in connection with the foregoing embodiments, it should be understood by those of ordinary skill in the art that modifications may still be made to the technical solutions disclosed in the various foregoing embodiments, or equivalent replacement may be made to a part of technical features thereof, but these modifications or alterations do not make the nature of corresponding technical solutions depart from the scope of the technical solutions of the various embodiments of the disclosure.

## Claims

1. A monitoring method, comprising:
not expecting to monitor a physical downlink control channel, PDCCH, in a target type common search space, CSS, set or not expecting to monitor a PDCCH in a Typel-PDCCH CSS set, in response to a quasi-co-location type D, QCL-TypeD, property of a first demodulation reference signal, DM-RS, being different from a QCL-TypeD property of a second DM-RS and in response to the PDCCH in the Typel-PDCCH CSS set or a physical downlink shared channel, PDSCH, associated with the PDCCH in the Typel-PDCCH CSS set overlapping in at least one symbol with the PDCCH in the target type CSS set or with a PDSCH associated with the PDCCH in the target type CSS set, the first DM-RS being used for monitoring the PDCCH in the Typel-PDCCH CSS set, the second DM-RS being used for monitoring the PDCCH in the target type CSS set, and the target type being TypeOB-PDCCH, and/or Type2A-PDCCH, and/or Type1A-PDCCH.

2. The monitoring method of claim 1, wherein in response to not expecting to monitor the PDCCH in the target type CSS set, the method further comprises:
monitoring the PDCCH in the Typel-PDCCH CSS set.

3. The monitoring method of claim 1, wherein in response to not expecting to monitor the PDCCH in the Typel-PDCCH CSS set, the method further comprises:
monitoring the PDCCH in the target type CSS set.

4. The monitoring method of any of claims 1 to 3, wherein
not expecting to monitor the PDCCH in the target type CSS set comprises:
for a single cell operation or an operation with carrier aggregation in a same frequency band, not expecting to monitor the PDCCH in the target type CSS set; or
not expecting to monitor the PDCCH in the Typel-PDCCH CSS set comprises:
for a single cell operation or an operation with carrier aggregation in a same frequency band, not expecting to monitor the PDCCH in the Typel-PDCCH CSS set.

5. A monitoring method, comprising:
not expecting to monitor a physical downlink control channel, PDCCH, in a Type1A-PDCCH common search space, CSS, set or not expecting to monitor a PDCCH in a UE-specific search space, USS, set or a target type CSS set, in response to a quasi-co-location type D, QCL-TypeD, property of a first demodulation reference signal, DM-RS, being different from a QCL-TypeD property of a second DM-RS and in response to the PDCCH in the Type1A-PDCCH CSS set or a physical downlink shared channel, PDSCH, associated with the PDCCH in the Type1A-PDCCH CSS set overlapping in at least one symbol with the PDCCH in the USS set and/or the target type CSS set or with a PDSCH associated with the PDCCH in the USS set and/or the target type CSS set, the first DM-RS being used for monitoring the PDCCH in the Type1A-PDCCH CSS set, the second DM-RS being used for monitoring the PDCCH in the USS set and/or the target type CSS set, and the target type being Type0-PDCCH, and/or Type0A-PDCCH, and/or TypeOB-PDCCH, and/or Type2-PDCCH, and/or Type2A-PDCCH, and/or Type3-PDCCH.

6. The monitoring method of claim 5, wherein in response to not expecting to monitor the PDCCH in the Type1A-PDCCH CSS set, the method further comprises:
monitoring the PDCCH in the USS set and/or the target type CSS set.

7. The monitoring method of claim 5, wherein in response to not expecting to monitor the PDCCH in the USS set or the target type CSS set, the method further comprises:
monitoring the PDCCH in the Type1A-PDCCH CSS set.

8. The monitoring method of any of claims 5 to 7, wherein
not expecting to monitor the PDCCH in the Type1A-PDCCH CSS set comprises:
for a single cell operation or an operation with carrier aggregation in a same frequency band, not expecting to monitor the PDCCH in the Type1A-PDCCH CSS set; or not expecting to monitor the PDCCH in the USS set or the target type CSS set comprises:
for a single cell operation or an operation with carrier aggregation in a same frequency band, not expecting to monitor the PDCCH in the USS set or the target type CSS set.

9. A monitoring apparatus, comprising:
a processing unit, configured to not expect to monitor a physical downlink control channel, PDCCH, in a target type common search space, CSS, set or configured to not expect to monitor a PDCCH in a Typel-PDCCH CSS set, in response to a quasi-co-location type D, QCL-TypeD, property of a first demodulation reference signal, DM-RS, being different from a QCL-TypeD property of a second DM-RS and in response to the PDCCH in the Typel-PDCCH CSS set or a physical downlink shared channel, PDSCH, associated with the PDCCH in the Typel-PDCCH CSS set overlapping in at least one symbol with the PDCCH in the target type CSS set or with a PDSCH associated with the PDCCH in the target type CSS set, the first DM-RS being used for monitoring the PDCCH in the Typel-PDCCH CSS set, the second DM-RS being used for monitoring the PDCCH in the target type CSS set, and the target type being TypeOB-PDCCH, and/or Type2A-PDCCH, and/or Type1A-PDCCH.

10. The monitoring apparatus of claim 9, wherein in response to not expecting to monitor the PDCCH in the target type CSS set, the method further comprises:
monitoring the PDCCH in the Typel-PDCCH CSS set.

11. The monitoring apparatus of claim 9, wherein in response to not expecting to monitor the PDCCH in the Typel-PDCCH CSS set, the method further comprises:
monitoring the PDCCH in the target type CSS set.

12. The monitoring apparatus of any of claims 9 to 11, wherein
not expecting to monitor the PDCCH in the target type CSS set comprises:
for a single cell operation or an operation with carrier aggregation in a same frequency band, not expecting to monitor the PDCCH in the target type CSS set; or
not expecting to monitor the PDCCH in the Type1-PDCCH CSS set comprises:
for a single cell operation or an operation with carrier aggregation in a same frequency band, not expecting to monitor the PDCCH in the Typel-PDCCH CSS set.

13. A monitoring apparatus, comprising:
a processing unit, configured to not expect to monitor a physical downlink control channel, PDCCH, in a Type1A-PDCCH common search space, CSS, set or configured to not expect to monitor a PDCCH in a UE-specific search space, USS, set or a target type CSS set, in response to a quasi-co-location type D, QCL-TypeD, property of a first demodulation reference signal, DM-RS, being different from a QCL-TypeD property of a second DM-RS and in response to the PDCCH in the Type1 A-PDCCH CSS set or a physical downlink shared channel, PDSCH, associated with the PDCCH in the Type1A-PDCCH CSS set overlapping in at least one symbol with the PDCCH in the USS set and/or the target type CSS set or with a PDSCH associated with the PDCCH in the USS set and/or the target type CSS set, the first DM-RS being used for monitoring the PDCCH in the Type1A-PDCCH CSS set, the second DM-RS being used for monitoring the PDCCH in the USS set and/or the target type CSS set, and the target type being Type0-PDCCH, and/or Type0A-PDCCH, and/or TypeOB-PDCCH, and/or Type2-PDCCH, and/or Type2A-PDCCH, and/or Type3-PDCCH.

14. The monitoring apparatus of claim 13, wherein in response to not expecting to monitor the PDCCH in the Type1A-PDCCH CSS set, the method further comprises:
monitoring the PDCCH in the USS set and/or the target type CSS set.

15. The monitoring apparatus of claim 13, wherein in response to not expecting to monitor the PDCCH in the USS set or the target type CSS set, the method further comprises:
monitoring the PDCCH in the Type1A-PDCCH CSS set.

16. The monitoring apparatus of any of claims 13 to 15, wherein
not expecting to monitor the PDCCH in the Type1A-PDCCH CSS set comprises:
for a single cell operation or an operation with carrier aggregation in a same frequency band, not expecting to monitor the PDCCH in the Type1A-PDCCH CSS set; or not expecting to monitor the PDCCH in the USS set or the target type CSS set comprises:
for a single cell operation or an operation with carrier aggregation in a same frequency band, not expecting to monitor the PDCCH in the USS set or the target type CSS set.

17. A chip, comprising:
a communication interface; and
a processor, configured to cause the chip to execute the method of any of claims 1 to 4, or configured to cause the chip to execute the method of any of claims 5 to 8.

18. A module device, a communication module, a power module, a storage module, and a chip, wherein
the power module is configured to provide power for the module device;
the storage module stores data and instructions;
the communication module is configured for internal communication of the module device, or for the module device to communicate with an external device; and
the chip is configured to execute the method of any of claims 1 to 4, or configured to execute the method of any of claims 5 to 8.

19. A terminal device, comprising:
a memory, storing computer programs comprising program instructions; and
a processor, configured to call the program instructions to execute the method of any of claims 1 to 4 or to execute the method of any of claims 5 to 8.

20. A computer-readable storage medium storing computer-readable instructions which, when run on a communication device, are operable with the communication device to execute the method of any of claims 1 to 4 or to execute the method of any of claims 5 to 8.
